# EUROPEAN PATENT APPLICATION

(11) **EP 4 789 817 A1**
(43) Date of publication of application: **12.08.2026**
(21) Application number: 25223198.0
(22) Date of filing: 15.12.2025
(51) Int. Cl.: B25F 5/00, B24B 23/02

(54) **ELECTRIC POWER TOOL**

(30) Priority: 06.02.2025 CN 202510135068
(71) Applicant: Nanjing Chervon Industry Co., Ltd., Nanjing, Jiangsu 211106 (CN)
(72) Inventor: SUN, Fangyong, Nanjing (CN); ZHU, Dianbo, Nanjing (CN)
(74) Representative: Sun, Yiming

(57) **Abstract**

An electric power tool includes: a housing; a motor that rotates about a first axis to generate a driving force; an output shaft connected to a working attachment, where the output shaft is drivable by the motor to drive the working attachment to rotate; a shaft locking mechanism operable to lock the output shaft when the motor is stopped; and a switch assembly operable to start the motor, where when the switch assembly is operated to start the motor, an operation acting on the switch assembly can release locking of the shaft locking mechanism to the output shaft.

## Description

### TECHNICAL FIELD

The present disclosure relates to power tools, and in particular to an electric power tool.

### BACKGROUND

Power tools play a very important role in daily production and life. The power tools include, but are not limited to, electric hand drills, impact drills, impact wrenches, impact screwdrivers, miter saws, etc. The electric hand drills and the impact drills can be fitted with bits of different diameters to drill holes in an object. The impact wrenches are configured to tighten or loosen bolts and nuts. The impact screwdrivers are typically configured to loosen or tighten screws. The miter saws can be configured to cut objects according to specific angles. The power tools can improve the working efficiency, and reduce the labor intensity.

When a blade of a miter saw needs to be replaced, in one method, one hand must directly press the shaft locking button continuously, while the other hand must manipulate the guard, loosen the blade locking bolt with a wrench, remove the blade, replace it with a new one, and then retighten the blade locking bolt. With this method, the operation can only be performed by one hand, which is inconvenient. In another method, after the shaft locking button is locked, the locked state of a shaft lock can be maintained by an elastic member or other elements, thereby allowing both hands to cooperate to replace the blade. However, users may sometimes forget to reset the shaft lock. Consequently, the direct-current (DC) electric power tool may experience the locked-rotor condition and thus fails to start. In case of the alternating-current (AC) electric power tool, the tool may be damaged or other potential safety hazards may arise.

This part is merely intended to provide background information related to the present disclosure, and does not necessarily constitute the prior art.

### SUMMARY

An objective of the present disclosure is to solve or at least mitigate a part or all of the above problems.

In order to achieve the above objectives, the present disclosure adopts the following technical solutions:

An electric power tool includes: a housing; a motor configured to rotate about a first axis to generate a driving force; an output shaft connected to a working attachment, where the output shaft is drivable by the motor to drive the working attachment to rotate; a shaft locking mechanism operable to lock the output shaft when the motor is stopped; and a switch assembly operable to start the motor, wherein when the switch assembly is operated to start the motor, an operation acting on the switch assembly can release locking of the shaft locking mechanism to the output shaft.

In some embodiments, the shaft locking mechanism includes a first operating member, a first locking member, and a second locking member; the first operating member is operable to move along a first direction; the first locking member is connected to the first operating member, and is drivable by the first operating member to move along the first direction to lock the output shaft; and the second locking member can move along a second direction to the first operating member, thereby stopping the first operating member from moving along a reverse direction of the first direction to keep a locking state of the first locking member.

In some embodiments, the electric power tool further includes a second operating member; the second operating member is operable to move along a third direction to release locking of the second locking member to the first operating member, such that the first operating member can move along the reverse direction of the first direction to release the locking state of the first locking member.

In some embodiments, the shaft locking mechanism further includes a first elastic member; the first elastic member is fixed between a first limiting rib of the housing and the second locking member in a manner of storing an elastic force; a locking hole is formed in the first operating member; and when the first operating member moves along the first direction until the locking hole is aligned with the second locking member, the elastic force stored by the first elastic member pushes the second locking member to move along the second direction and be engaged in the locking hole.

In some embodiments, the shaft locking mechanism further includes a second elastic member; the second elastic member is sleeved on the first locking member; one end of the second elastic member abuts against a second limiting rib of the housing, and the other end of the second elastic member abuts against a bottom of the first operating member; a locking hole is formed in the first operating member; and when the second locking member is operated to move along a reverse direction of the second direction, the second locking member moves out of the locking hole, and an elastic force stored by the second elastic member pushes the first operating member, thereby driving the first locking member to move along the reverse direction of the first direction to release the locking state of the first locking member.

In some embodiments, the shaft locking mechanism further includes a connecting member; one end of the connecting member is fixedly connected to the switch assembly, and the other end of the connecting member is fixedly connected to the second locking member; and a pivotal movement generated by the switch assembly after being operated is converted into a displacement of the second locking member along a reverse direction of the second direction through the connecting member.

In some embodiments, the electric power tool further includes a locking wheel; the locking wheel is fixed on an output end of the output shaft; a shaft pin hole is formed in the locking wheel; and the first locking member moves along the first direction to be engaged in the shaft pin hole to lock the locking wheel.

In some embodiments, the output shaft is configured as a rotor shaft of the motor; the first locking member is directly sleeved on the output shaft; the first locking member includes an avoidance space and a locking space communicated with the avoidance space; and when the first operating member moves along the first direction, a peripheral side of the output shaft is switched from the avoidance space to the locking space.

In some embodiments, the first operating member is integrally formed with the first locking member.

An electric power tool includes: a motor configured to rotate about a first axis to generate a driving force; an output shaft connected to a working attachment, where the output shaft is drivable by the motor to drive the working attachment to rotate; a shaft locking mechanism operable to lock the output shaft when the motor is stopped; and a switch assembly operable to start the motor, wherein the shaft locking mechanism is configured to unlock the output shaft in at least two ways.

In some embodiments, the shaft locking mechanism includes a first operating member, a first locking member, and a second locking member; the first operating member is operable to move along a first direction; the first locking member is connected to the first operating member, and is drivable by the first operating member to move along the first direction to lock the output shaft; and the second locking member can move along a second direction to the first operating member, thereby stopping the first operating member from moving along a reverse direction of the first direction to keep a locking state of the first locking member.

In some embodiments, the second locking member is directly operated to move along a reverse direction of the second direction, so as to release the locking state of the first locking member.

In some embodiments, the second locking member is indirectly operated to move along a reverse direction of the second direction, so as to release the locking state of the first locking member.

An electric power tool includes: a motor configured to rotate about a first axis to generate a driving force; an output shaft connected to a working attachment, where the output shaft is drivable by the motor to drive the working attachment to rotate; a shaft locking mechanism operable to lock the output shaft when the motor is stopped; and a switch assembly operable to start the motor; and the electric power tool further includes: a connecting member configured to connect the switch assembly and the shaft locking mechanism, wherein when the switch assembly is operated to start the motor, the connecting member can drive the shaft locking mechanism to unlock the output shaft.

In some embodiments, the shaft locking mechanism includes a first operating member, a first locking member, and a second locking member; the first operating member is operable to move along a first direction; the first locking member is connected to the first operating member, and is drivable by the first operating member to move along the first direction to lock the output shaft; and the second locking member can move along a second direction to the first operating member, thereby stopping the first operating member from moving along a reverse direction of the first direction to keep a locking state of the first locking member.

In some embodiments, the electric power tool further includes a second operating member; the second operating member is operable to move along a third direction to release locking of the second locking member to the first operating member, such that the first operating member can move along the reverse direction of the first direction to release the locking state of the first locking member.

In some embodiments, the electric power tool further includes a locking wheel; the locking wheel is fixed on an output end of the output shaft; a shaft pin hole is formed in the locking wheel; and the first locking member moves along the first direction to be engaged in the shaft pin hole to lock the locking wheel.

In some embodiments, the output shaft is configured as a rotor shaft of the motor; the first locking member is directly sleeved on the output shaft; the first locking member includes an avoidance space and a locking space communicated with the avoidance space; and when the first operating member moves along the first direction, a peripheral side of the output shaft is switched from the avoidance space to the locking space.

In some embodiments, the first operating member is integrally formed with the first locking member.

In some embodiments, the connecting member is at least one of a rigid member or a flexible member.

### BRIEF DESCRIPTION OF THE DRAWINGS

FIG. 1 is a partial structural view of an electric power tool;
FIG. 2 is a partial structural view of an electric power tool from another viewing angle;
FIG. 3 is a cross-sectional view of an electric power tool when an output shaft is in a locked state;
FIG. 4 is a schematic view for operating a second operating member in an electric power tool;
FIG. 5 is a schematic view of unlocking via a switch assembly in an electric power tool;
FIG. 6 is a cross-sectional view of an electric power tool when an output shaft is in an unlocked state;
FIG. 7 is a schematic view of an electric power tool when an output shaft is in an unlocked state;
FIG. 8 is a partial structural view of an electric power tool from still another viewing angle;
FIG. 9 is a structural view of another first locking member for locking an output shaft in an electric power tool;
FIG. 10 is a structural view of another first locking member for unlocking an output shaft in an electric power tool; and
FIG. 11 is a structural view of another first locking member for unlocking an output shaft in an electric power tool.

In the figures:
1: housing, 11: first limiting rib, 12: second limiting rib, 13: limiting portion, 2: motor, 21: first axis, 3: output shaft, 4: shaft locking mechanism, 41: first operating member, 411: locking hole, 42: first locking member, 421: avoidance space, 422: locking space, 43: second locking member, 44: first elastic member, 45: second elastic member, 46: connecting member, 47: fixing member, 5: switch assembly, 51: trigger, 6: second operating member, 7: locking wheel, 71: shaft pin hole, and 8: working attachment.

### DETAILED DESCRIPTION OF THE EMBODIMENTS

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, Aand/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the term "device", "module" or "unit" may be implemented in the form of hardware or software to achieve specific functions.

For power tools, a motor, a working attachment, and a control board including electronic elements are typically integrated into a housing for use. The working attachment is configured to implement operation. In actual application, by replacing different working attachments, the power tools can form lawn mowers, snow sweepers, tamping machines, water sprinklers, high-pressure cleaners, wood sawing machines, and the like, and play an important role in multiple fields such as gardening, construction, agriculture, and daily life. The power tools may also be bench-type tools, such as bench saws, miter saws, circular saws, metal cutting machines, electric routers, trimmers, and marble machines. Alternatively, the power tools may further be grinding tools, such as angle grinders and sanders.

As a type of power tools, the electric power tools are driven by a DC or an AC. In the embodiment, the electric power tool mainly relates to the AC electric power tool, and may be powered by an AC power cord connected to the mains supply, or by a connecting cable configured to be connected to a power device. The mains supply or the power device is configured to supply power to corresponding components of the electric power tool in cooperation with corresponding rectifier, filter and voltage regulator circuits.

When the working attachment of the electric power tool is replaced due to wear or damage, a shaft locking button is typically disposed on the electric power tool, so as to prevent rotation of the working attachment. The shaft locking button can be configured to lock an output shaft, thereby preventing the rotation of the working attachment during disassembly and replacement of the working attachment. The shaft locking button is typically operated in two methods according to its arrangement. In one method, one hand must directly press the shaft locking button continuously, while the other hand must manipulate the guard, loosen the blade locking bolt with a wrench, remove the working attachment, replace it with a new one, and then retighten the blade locking bolt. In the other method, after the shaft locking button is locked, the locked state of the shaft lock can be maintained by an elastic member or other elements, thereby freeing both hands to replace the working attachment. With the first method, the operation is only performed by one hand, which is inconvenient, resulting in low disassembly efficiency. In the second method, users may sometimes forget to reset the shaft lock, such that the electric power tool experiences the locked-rotor condition and thus fails to start. In case of the AC electric power tool, irreversible damage may be caused to the tool, or certain hazards arise to the users.

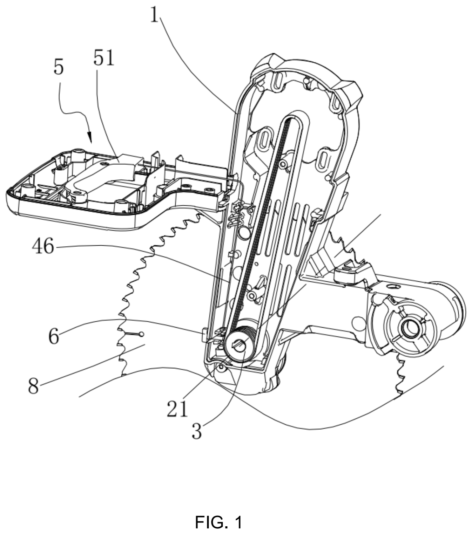

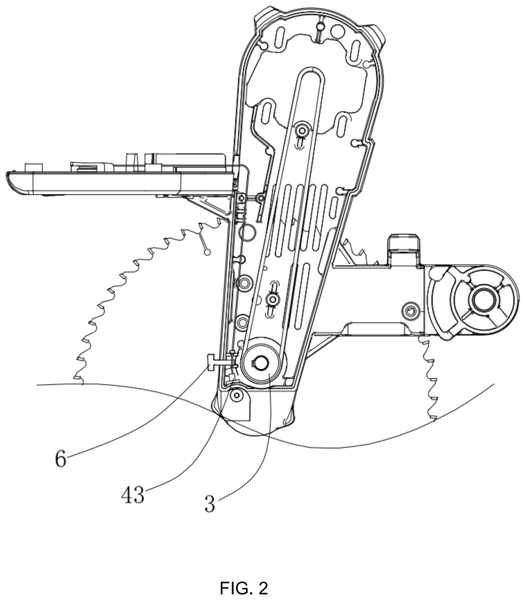

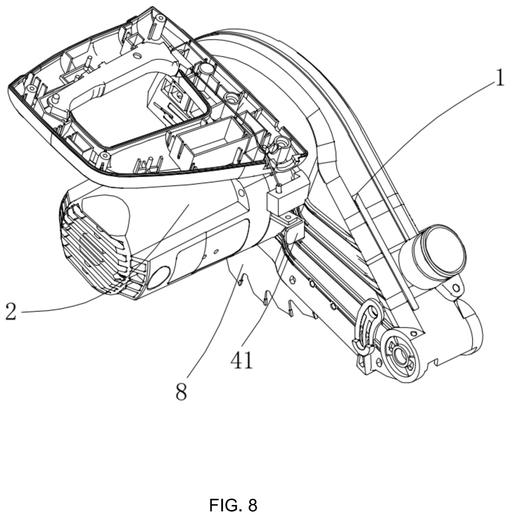

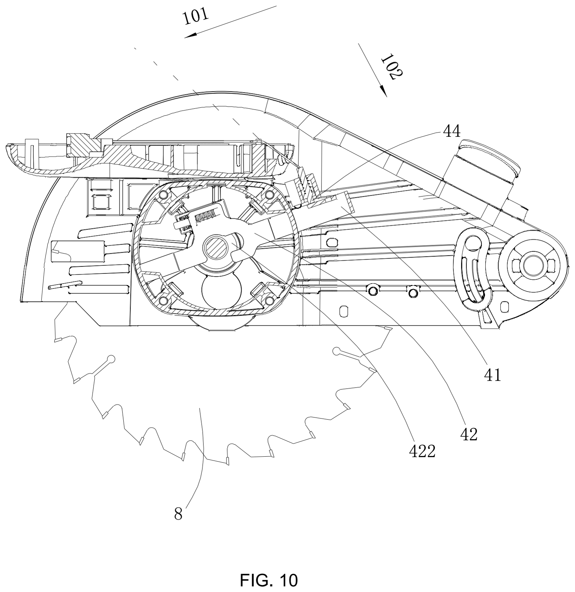

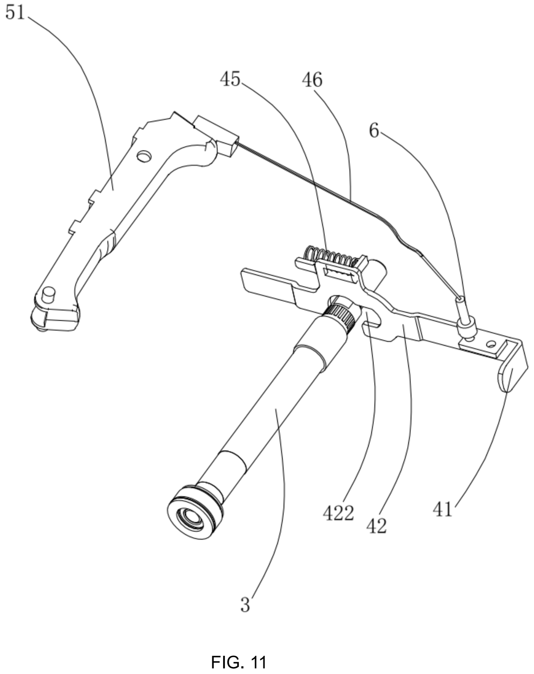

In view of the above problem, to facilitate convenient and quick replacement of the working attachment, and eliminate the locked-rotor risk during startup, as shown in FIGS. 1-11, the present disclosure provides an electric power tool. The electric power tool includes housing 1, motor 2, output shaft 3, shaft locking mechanism 4, and switch assembly 5.

The motor 2 is configured to rotate about first axis 21 to generate a driving force. The output shaft 3 is configured to connect working attachment 8. The output shaft 3 is drivable by the motor 2 to drive the working attachment 8 to rotate. The shaft locking mechanism 4 is operable to lock the output shaft 3 when the motor 2 is stopped. The switch assembly 5 is operable to start the motor 2. When the switch assembly 5 is operated to start the motor 2, the operation on the switch assembly 5 can release locking of the shaft locking mechanism 4 to the output shaft 3. That is to say, the switch assembly 5 is configured such that an operation for starting the motor 2 also unlocks the output shaft 3 from being locked by the shaft locking mechanism 4. In other words, an operation acting on the switch assembly 5 to start the motor 2 also unlocks the output shaft 3 from being locked.

When the working attachment 8 is to be replaced, with the shaft locking mechanism 4 for locking the output shaft 3, the output shaft 3 is fixed. This can free both hands of the user to replace the working attachment 8, and thus the working attachment 8 can be replaced more quickly and more conveniently. Upon completion of replacement of the working attachment 8, when the electric power tool is used, and the switch assembly 5 is operated to start the motor 2, the locking of the shaft locking mechanism 4 to the output shaft 3 can be released synchronously. Even though the user forgets to unlock the shaft locking mechanism 4, the locking of the shaft locking mechanism 4 to the output shaft 3 can still be released in use, thereby eliminating the risk during startup.

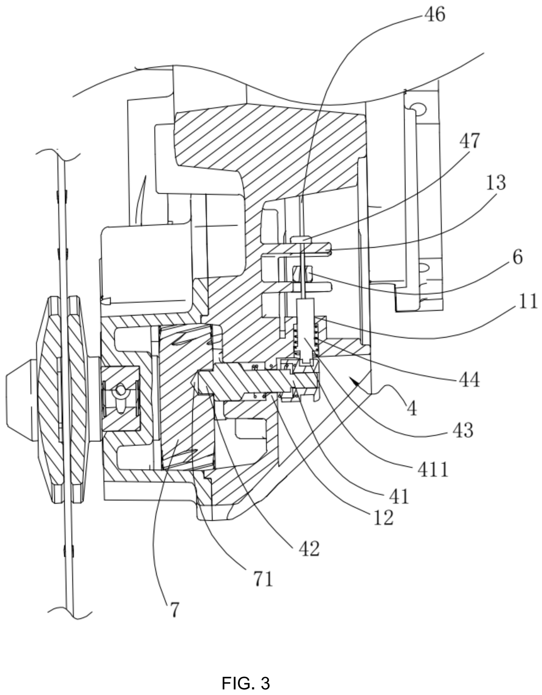

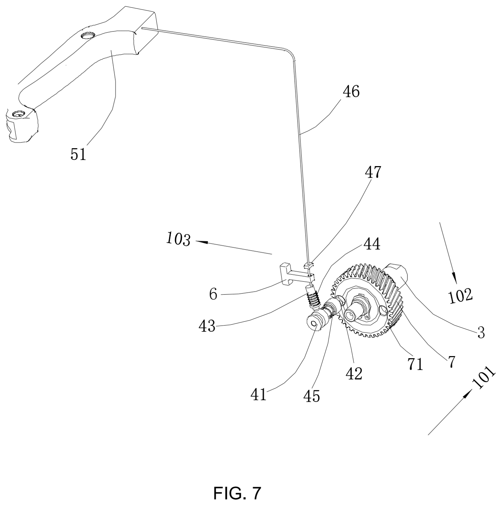

As shown in FIG. 3 and FIG. 7, in some embodiments, the shaft locking mechanism 4 includes first operating member 41, first locking member 42, and second locking member 43. The first operating member 41 is operable to move along a first direction 101. The first locking member 42 is connected to the first operating member 41. The first locking member 42 is drivable by the first operating member 41 to move along the first direction 101 to lock the output shaft 3. The second locking member 43 can move along a second direction 102 to the first operating member 41, thereby stopping the first operating member 41 from moving along a reverse direction of the first direction 101 to keep a locking state of the first locking member 42. When the working attachment 8 is to be replaced, by moving the first operating member 41 along the first direction 101, the first locking member 42 is driven to move along the first direction 101 to lock the output shaft 3. Meanwhile, the second locking member 43 moves along the second direction 102 to lock the first operating member 41, such that the output shaft 3 is stably locked. Both hands of the user can be freed to replace the working attachment 8 to ensure the replacement efficiency.

As shown in FIGS. 1-4, in some embodiments, the electric power tool further includes second operating member 6. The second operating member 6 is operable to move along a third direction 103 to release locking of the second locking member 43 to the first operating member 41, such that the first operating member 41 can move along the reverse direction of the first direction 101 to release the locking state of the first locking member 42. Upon completion of replacement of the working attachment 8, by moving the second operating member 6 along the third direction 103, the locking of the second locking member 43 to the first operating member 41 can be released, such that the first operating member 41 moves along the reverse direction of the first direction 101 to release the first locking member 42, thereby unlocking the output shaft 3. The second operating member 6 can function as an alternative of the switch assembly 5 to realize redundant design, thereby unlocking the output shaft 3 in two ways. The user can consciously operate the second operating member 6 to unlock the output shaft 3, or unconsciously operate the switch assembly 5 to unlock the output shaft 3, thereby eliminating the risk during startup.

As shown in FIG. 3, in some embodiments, the shaft locking mechanism 4 further includes first elastic member 44. The first elastic member 44 is fixed between first limiting rib 11 of the housing 1 and the second locking member 43 in a manner of storing an elastic force. Locking hole 411 is formed in the first operating member 41. When the first operating member 41 moves along the first direction 101 until the locking hole 411 is aligned with the second locking member 43, the elastic force stored by the first elastic member 44 pushes the second locking member 43 to move along the second direction 102 and be engaged in the locking hole 411. The first elastic member 44 may be a compression spring. The first elastic member 44 is in a compressed state. When the first operating member 41 moves along the first direction 101 until the locking hole 411 is aligned with the second locking member 43, the first locking member 42 locks the output shaft 3. The first elastic member 44 under an action of its own elastic force pushes the second locking member 43 to engage with the locking hole 411, thereby locking the first operating member 41 and thus enabling the first locking member 42 connected to the first operating member 41 to stably cooperate with the output shaft 3.

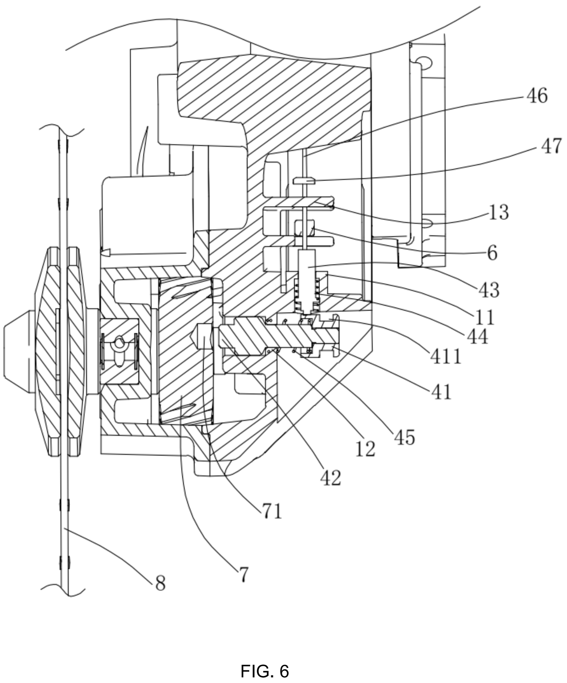

As shown in FIG. 6, in some embodiments, the shaft locking mechanism 4 further includes second elastic member 45. The second elastic member 45 is sleeved on the first locking member 42. One end of the second elastic member 45 abuts against second limiting rib 12 of the housing 1, and the other end of the second elastic member 45 can abut against a bottom of the first operating member 41. Locking hole 411 is formed in the first operating member 41. When the second locking member 43 is operated to move along a reverse direction of the second direction 102, the second locking member 43 moves out of the locking hole 411, and an elastic force stored by the second elastic member 45 pushes the first operating member 41, thereby driving the first locking member 42 to move along the reverse direction of the first direction 101 to release the locking state of the first locking member 42. The second elastic member 45 may be a compression spring. When the first operating member 41 moves along the first direction 101 to drive the first locking member 42 to lock the output shaft 3, the second elastic member 45 is compressed to store energy. After the second locking member 43 unlocks the first operating member 41, the second elastic member 45 under an action of its own elastic force pushes the first operating member 41 to reset, thereby enabling the first locking member 42 connected to the first operating member 41 to unlock the output shaft 3.

As shown in FIGS. 3-7, in some embodiments, the shaft locking mechanism 4 further includes connecting member 46. One end of the connecting member 46 is fixedly connected to the switch assembly 5, and the other end of the connecting member 46 is fixedly connected to the second locking member 43. A pivotal movement generated by the switch assembly 5 after being operated by a user is converted into a displacement of the second locking member 43 along a reverse direction of the second direction 102 through the connecting member 46. The switch assembly 5 may include an operable switch such as trigger 51, a button, and other switches that are operable to start an electric motor, and may also include a locking member that can lock the operable switch to serve as a safety switch. One end of the connecting member 46 is connected to the operable switch or the locking member. Taking the trigger 51 as an example, when the trigger 51 is pressed, the trigger 51 pivots relative to the housing 1, such that the second locking member 43 is pulled by the connecting member 46 to move along the reverse direction of the second direction 102, and the second locking member 43 unlocks the first operating member 41. In other embodiments, the switch assembly 5 may further move relative to the housing 1. Taking the trigger 51 as an example, when the trigger 51 is operated to move relative to the housing 1, the second locking member 43 may also be driven by the connecting member 46 to move, thereby unlocking the first operating member 41.

In some embodiments, the connecting member 46 may be rigid or flexible or partially rigid and partially flexible, and can be made of a material such as a metal and a carbon fiber. The specific shape and material of the connecting member 46 are not excessively limited. In the present disclosure, the connecting member 46 is a steel wire rope, ensuring a strength and achieving a certain degree of flexibility, thereby facilitating its arrangement in the housing 1.

As shown in FIG. 3, FIG. 6, and FIG. 7, in some embodiments, fixing member 47 is fixedly disposed on the connecting member 46. Limiting portion 13 is fixedly disposed in the housing 1. The connecting member 46 is connected to the second locking member 43 through the limiting portion 13. The second operating member 6 and the fixing member 47 are respectively located on two sides of the limiting portion 13. When the second locking member 43 locks the first operating member 41, the fixing member 47 is attached to the limiting portion 13. When the switch assembly 5 is operated and thus the second locking member 43 is driven by the connecting member 46 to move, the fixing member 47 moves away from the limiting portion 13. When the second operating member 6 is operated to drive the connecting member 46 to unlock the first operating member 41, since a position of the fixing member 47 is limited by the limiting portion 13, a portion of the connecting member 46 extending relative to the limiting portion 13 and connected to the second locking member 43 moves, thereby effectively driving the second locking member 43 to move to unlock the first operating member 41.

As shown in FIG. 6 and FIG. 7, in some embodiments, the electric power tool further includes locking wheel 7. The locking wheel 7 is fixed on an output end of the output shaft 3. Shaft pin hole 71 is formed in the locking wheel 7. The first locking member 42 moves along the first direction 101 to be engaged in the shaft pin hole 71 to lock the locking wheel 7. Through cooperation between the first locking member 42 and the shaft pin hole 71, the output shaft 3 can be locked. Therefore, when the working attachment 8 is disassembled, both hands of the user are freed to facilitate quick disassembly. A plurality of shaft pin holes 71 may be formed in the locking wheel 7 at intervals to facilitate cooperation between the first locking member 42 and the locking wheel 7.

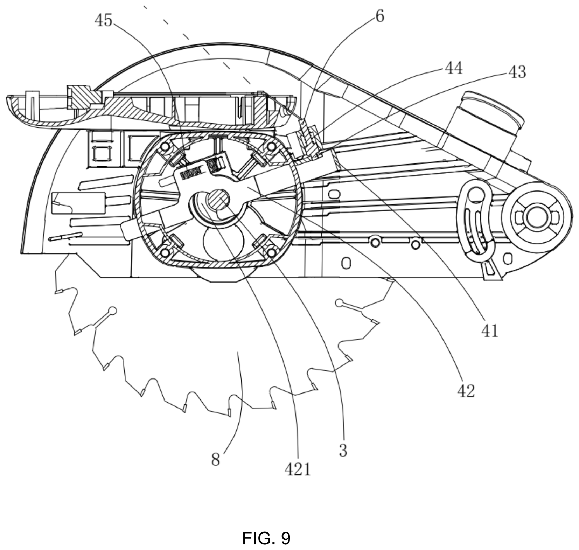

As shown in FIGS. 9-11, in some embodiments, the output shaft 3 is configured as a rotor shaft of the motor 2. The first locking member 42 is directly sleeved on the output shaft 3. The first locking member 42 includes avoidance space 421 and locking space 422 communicated with the avoidance space 421. When the first operating member 41 moves along the first direction 101, a peripheral side of the output shaft 3 is switched from the avoidance space 421 to the locking space 422. An area of the locking space 422 is less than an area of the avoidance space 421. A radius of a circular arc corresponding to the avoidance space 421 is greater than a radius of the output shaft 3. The locking space 422 is a U-shaped groove. When the first operating member 41 is pushed to move along the first direction 101, the output shaft 3 is switched to the locking space 422, such that the first locking member 42 is engaged with the output shaft 3 to lock the output shaft 3. It should be noted that the area of the locking space 422 refers to an area when the locking space 422 is observed at a side of the electric power tool as shown in the pure side view of FIGS. 9 to 10, and the area of the avoidance space 421 refers to an area when the avoidance space 421 is observed at the same side of the electric power tool.

As shown in FIG. 9, in some embodiments, the second operating member 6 and the second locking member 43 may be designed as an integrated structure. The second operating member 6 extends out relative to the housing 1. The second operating member 6 is operable to move along the second direction 102 to release the locking of the second locking member 43 to the first operating member 41, such that the first operating member 41 can move along the reverse direction of the first direction 101 to release the locking state of the first locking member 42. The second operating member 6 can function as an alternative of the switch assembly 5 to realize redundant design, thereby unlocking the output shaft 3 in two ways. The user can consciously operate the second operating member 6 to unlock the output shaft 3, or unconsciously operate the switch assembly 5 to unlock the output shaft 3, thereby eliminating the risk during startup. Moreover, the integrated structure for the second operating member 6 and the second locking member 43 facilitates manufacturing.

As shown in FIG. 3 and FIG. 9, in some embodiments, the first operating member 41 is integrally formed with the first locking member 42. The above arrangement can ensure the connecting strength between the first operating member 41 and the first locking member 42, and facilitates the manufacturing.

As shown in FIGS. 1-11, the present disclosure further provides an electric power tool, including motor 2, output shaft 3, shaft locking mechanism 4, and switch assembly 5.

The motor 2 is configured to rotate about first axis 21 to generate a driving force. The output shaft 3 is configured to connect working attachment 8. The output shaft 3 is drivable by the motor 2 to drive the working attachment 8 to rotate. The shaft locking mechanism 4 is operable to lock the output shaft 3 when the motor 2 is stopped. The shaft locking mechanism 4 is configured to unlock the output shaft 3 in at least two ways. The switch assembly 5 is operable to start the motor 2.

When the working attachment 8 is to be replaced, with the shaft locking mechanism 4 for locking the output shaft 3, the output shaft 3 is fixed. This can free both hands of the user to replace the working attachment 8, and thus the working attachment 8 can be replaced more quickly and more conveniently. Upon completion of replacement of the working attachment 8, when the electric power tool is used, the output shaft 3 is unlocked in at least two ways, and any method can be used by the user to unlock the output shaft 3. In use, the locking of the shaft locking mechanism 4 to the output shaft 3 can still be released, thereby eliminating the risk during startup.

As shown in FIG. 3, FIG. 6, and FIG. 7, in some embodiments, the shaft locking mechanism 4 includes first operating member 41, first locking member 42, and second locking member 43. The first operating member 41 is operable to move along a first direction 101. The first locking member 42 is connected to the first operating member 41. The first locking member 42 is drivable by the first operating member 41 to move along the first direction 101 to lock the output shaft 3. The second locking member 43 can move along a second direction 102 to the first operating member 41, thereby stopping the first operating member 41 from moving along a reverse direction of the first direction 101 to keep a locking state of the first locking member 42. When the working attachment 8 is to be replaced, by moving the first operating member 41 along the first direction 101, the first locking member 42 is driven to move along the first direction 101 to lock the output shaft 3. Meanwhile, the second locking member 43 moves along the second direction 102 to lock the first operating member 41, such that the output shaft 3 is stably locked. Both hands of the user can be freed to replace the working attachment 8 to ensure the replacement efficiency.

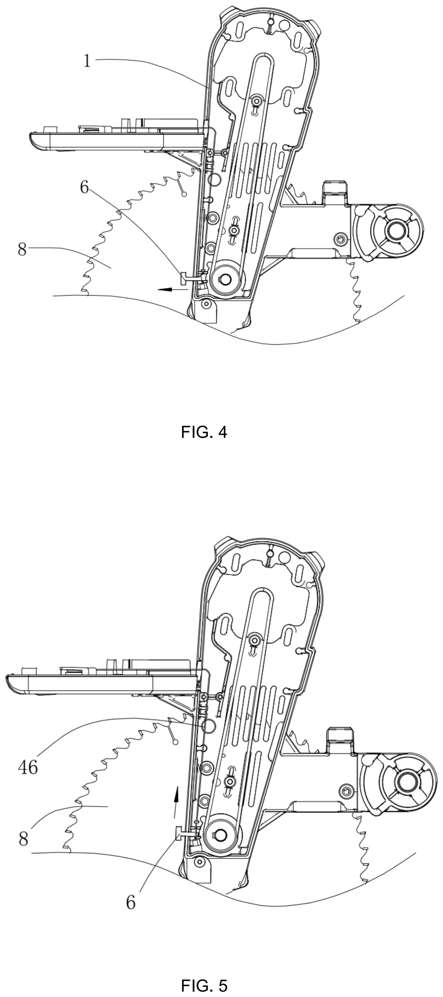

As shown in FIG. 4, in some embodiments, the second locking member 43 is directly operated to move along a reverse direction of the second direction 102, so as to release the locking state of the first locking member 42. With direct operation of the user, the second locking member 43 moves along the reverse direction of the second direction 102 to unlock the first locking member 42. Consequently, the output shaft 3 is unlocked, and the electric power tool can normally work.

As shown in FIG. 5, in some embodiments, the second locking member 43 is indirectly operated to move along a reverse direction of the second direction 102, so as to release the locking state of the first locking member 42. Connecting member 46 may be used. One end of the connecting member 46 is connected to the second locking member 43, and the other end of the connecting member 46 is connected to the switch assembly 5. A pivotal movement generated by the switch assembly 5 after being operated is converted into a displacement of the second locking member 43 along the reverse direction of the second direction 102 through the connecting member 46. The switch assembly 5 may include an operable switch such as trigger 51, a button, and other switches that are operable to start an electric motor, and may also include a locking member that can lock the operable switch to serve as a safety switch. With the above method, the first operating member 41 can also be unlocked, such that the first locking member 42 is unlocked with the output shaft 3, and the electric power tool may normally work.

As shown in FIGS. 1-11, the present disclosure further provides an electric power tool, including motor 2, output shaft 3, shaft locking mechanism 4, switch assembly 5, and connecting member 46.

The motor 2 is configured to rotate about first axis 21 to generate a driving force. The output shaft 3 is configured to connect working attachment 8. The output shaft 3 is drivable by the motor 2 to drive the working attachment 8 to rotate. The shaft locking mechanism 4 is operable to lock the output shaft 3 when the motor 2 is stopped. The switch assembly 5 is operable to start the motor 2. The connecting member 46 is configured to connect the switch assembly 5 and the shaft locking mechanism 4. When the switch assembly 5 is operated to start the motor 2, the connecting member 46 can drive the shaft locking mechanism 4 to unlock the output shaft 3.

When the working attachment 8 is to be replaced, with the shaft locking mechanism 4 for locking the output shaft 3, the output shaft 3 is fixed. This can free both hands of the user to replace the working attachment 8, and thus the working attachment 8 can be replaced more quickly and more conveniently. Upon completion of replacement of the working attachment 8, when the electric power tool is used, and the switch assembly 5 is operated to start the motor 2, the switch assembly 5 can synchronously release the locking of the shaft locking mechanism 4 to the output shaft 3 through the connecting member 46. Even though the user forgets to unlock the shaft locking mechanism 4, the locking of the shaft locking mechanism 4 to the output shaft 3 can still be released in use, thereby eliminating the risk during startup.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. An electric power tool, comprising:
a housing (1);
a motor (2) that rotates about a first axis (21) to generate a driving force;
an output shaft (3) connected to a working attachment (8), wherein the output shaft is drivable by the motor to drive the working attachment to rotate;
a shaft locking mechanism (4) operable to lock the output shaft when the motor is stopped; and
a switch assembly (5) operable to start the motor;
wherein when the switch assembly is operated to start the motor, an operation acting on the switch assembly to start the motor releases locking of the output shaft by the shaft locking mechanism.

2. The electric power tool according to claim 1, wherein the shaft locking mechanism comprises:
a first operating member (41) operable to move along a first direction (101);
a first locking member (42) connected to the first operating member and drivable by the first operating member to move along the first direction to lock the output shaft; and
a second locking member (43) that moves along a second direction (102) to the first operating member, thereby stopping the first operating member from moving along a reverse direction of the first direction to keep a locking state of the first locking member.

3. The electric power tool according to claim 2, wherein the second locking member is directly operated to move along a reverse direction of the second direction, so as to release the locking state of the first locking member.

4. The electric power tool according to claim 2, wherein the second locking member is indirectly operated to move along a reverse direction of the second direction, so as to release the locking state of the first locking member.

5. The electric power tool according to claim 2, further comprising a second operating member (6), wherein the second operating member is operable to move along a third direction (103) to release locking of the second locking member to the first operating member, such that the first operating member moves along the reverse direction of the first direction to release the locking state of the first locking member.

6. The electric power tool according to claim 2, wherein the shaft locking mechanism further comprises a first elastic member (44), wherein the first elastic member is compressed and disposed between a first limiting rib (11) of the housing and the second locking member, so as to cooperate with the second locking member to lock the output shaft.

7. The electric power tool according to claim 6, wherein a locking hole (411) is formed in the first operating member; and when the first operating member moves along the first direction until the locking hole is aligned with the second locking member, an elastic force stored by the first elastic member pushes the second locking member to move along the second direction and be engaged in the locking hole.

8. The electric power tool according to claim 2, wherein the shaft locking mechanism further comprises a second elastic member (45), and the second elastic member is sleeved on the first locking member.

9. The electric power tool according to claim 8, wherein a first end of the second elastic member abuts against a second limiting rib (12) of the housing, and a second end of the second elastic member abuts against a bottom of the first operating member; a locking hole (411) is formed in the first operating member; and when the second locking member is operated to move along a reverse direction of the second direction, the second locking member moves out of the locking hole, and an elastic force stored by the second elastic member pushes the first operating member, thereby driving the first locking member to move along the reverse direction of the first direction to release the locking state of the first locking member.

10. The electric power tool according to claim 2, wherein the shaft locking mechanism further comprises a connecting member (46); a first end of the connecting member is fixedly connected to the switch assembly, and a second end of the connecting member is fixedly connected to the second locking member; and a pivotal movement generated by the switch assembly after being operated is converted into a displacement of the second locking member along a reverse direction of the second direction through the connecting member.

11. The electric power tool according to claim 2, further comprising a locking wheel (7), wherein the locking wheel is fixed on an output end of the output shaft; a shaft pin hole (71) is formed in the locking wheel; and the first locking member moves along the first direction to be engaged in the shaft pin hole to lock the locking wheel.

12. The electric power tool according to claim 2, wherein the output shaft is configured as a rotor shaft of the motor; the first locking member is directly sleeved on the output shaft; the first locking member comprises an avoidance space (421) and a locking space (422) communicated with the avoidance space; and when the first operating member moves along the first direction, a peripheral side of the output shaft is switched from the avoidance space to the locking space.

13. The electric power tool according to claim 2, wherein the first operating member is integrally formed with the first locking member.

14. The electric power tool according to claim 10, wherein the connecting member is at least one of a rigid member or a flexible member.
